# EUROPEAN PATENT APPLICATION

(11) **EP 2 028 583 A2**
(43) Date of publication of application: **25.02.2009**
(21) Application number: 08014857.0
(22) Date of filing: 21.08.2008
(51) Int. Cl.: G06F 3/01, G06F 3/048, G06F 3/041

(54) **Method and apparatus for providing input feedback in a portable terminal**

(30) Priority: 22.08.2007 KR 20070084438
(71) Applicant: Samsung Electronics Co., Ltd, Suwon-si, Gyeonggi-do 443-742 (KR)
(72) Inventor: Sung-Soo, Park, Suwon-si Gyeonggi-do 443-742 (KR); Yu-Sheop, Lee, Suwon-si Gyeonggi-do 443-742 (KR)
(74) Representative: Grünecker, Kinkeldey, Stockmair & Schwanhäusser Anwaltssozietät

(57) **Abstract**

An input feedback method and apparatus in a portable terminal having a touch input device are provided, in which a user's finger contact on a screen having a plurality of objects displayed is sensed, a value sensed from the finger contact is compared with at least one threshold, and a vibration is generated in a different manner according to a comparison result.

## Description

### Background of the Invention

### 1. Field of the Invention

The present invention generally relates a touch screen technology and more particularly, to a method and apparatus for notifying a user that he has selected a right target object on a limited screen.

### 2. Description of the Related Art

A touch screen or a touch pad is a kind of input device that finds its applications in portable terminals such as a mobile phone, a smart phone, an Automatic Teller Machine (ATM), a Palm Personal Computer (PC), and a Personal Digital Assistant (PDA).

The touch screen or the touch pad offers an interface through which a user can enter a command or information by contacting an icon displayed on a screen with his hand or a stylus pen. Along with the recent trend of portable terminals toward small size and light weight, touch screens or touch pads are smaller and lighter in weight. Therefore, portable terminals that provide a user interface through a touch screen or a touch pad without the need for a separate keypad are on the market.

However, when using the touch screen or the touch pad, the user does not have a sense of contact as a keypad provides and, thus, the user cannot be sure whether his finger has contacted a correct position before a selected operation is performed.

Considering the recent trend toward small-size, lightweight portable terminals, it may occur that the portable terminal executes an unintended command due to the user's incorrect touch on a limited screen with many menus and thus the user may be required to re-enter a command. Also, the user's finger may contact a larger area than an icon displayed on the touch screen or the touch pad. The resulting inaccurate icon pointing leads to an incorrect entry. As a consequence, the portable terminal performs an operation that the user has not intended.

### Summary of the Invention

Accordingly, an aspect of exemplary embodiments of the present invention is to provide input feedback in a portable terminal with a touch screen or a touch pad, particularly a method and apparatus for notifying a user that a correct target object has been contacted by generating vibrations with a controlled vibration force when the user selects a desired object on a small-size portable terminal requiring fine pointing on a limited screen.

In accordance with an aspect of exemplary embodiments of the present invention, there is provided an input feedback method in a portable terminal having a touch input device in which a user's finger contact on a screen having a plurality of objects displayed is sensed, a value sensed from the finger contact is compared with at least one threshold, and a vibration is generated in a different manner according to a comparison result.

In accordance with another aspect of exemplary embodiments of the present invention, there is provided an input feedback apparatus in a portable terminal having a touch input device in which an area setter sets areas of a plurality of current objects displayed on a screen as vibration activation areas, a sensor monitors a user's finger contact on the screen, a decider determines whether a contacted area is a vibration activation area, compares a value sensed from the finger contact with at least one threshold, and outputs a comparison result, a controller outputs information about the objects to the area setter, receives the comparison result from the decider, and generates a vibration command signal indicating generation of a vibration in a different manner according to the comparison result, and a vibration controller generates a vibration by controlling a vibration force and a vibration duration under the control of the controller.

### Brief Description of the Drawings

The above and other objects, features and advantages of certain exemplary embodiments of the present invention will be more apparent from the following detailed description taken in conjunction with the accompanying drawings, in which:
FIG 1 illustrates an overall operation when a user touches a screen with his finger, for input in a portable terminal according to the present invention;
FIGs. 2A, 2B and 2C are views illustrating sequential operations when the user touches the screen with his finger, for input in the portable terminal according to the present invention;
FIG 3 illustrates an operation when the user touches a wrong area on the screen with his finger, for input in the portable terminal according to the present invention;
FIG 4 is a flowchart illustrating methods for providing an input feedback in the portable terminal according to exemplary embodiments of the present invention; and
FIG 5 is a block diagram of an apparatus for providing an input feedback in the portable terminal according to an exemplary embodiment of the present invention.

Throughout the drawings, the same drawing reference numerals will be understood to refer to the same elements, features and structures.

### Detailed Description of the Invention

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

A memory (not shown) applied to the present invention includes a Read Only Memory (ROM), a Random Access Memory (RAM), and a voice memory, for storing a plurality of programs and information (data) required for implementing the present invention. The memory also stores a software program that makes a predetermined area of a screen vibrate, when a user's finger contacts a touch screen.

The present invention provides a method and apparatus for integrating a touch screen function and a touch pad function into the overall screen of a portable terminal.

Herein, it is made clear that a portable terminal can be any of a cellular phone, a personal portable communication phone, and a composite wireless terminal. The following description is made on the assumption that the portable terminal has a configuration common to those terminals.

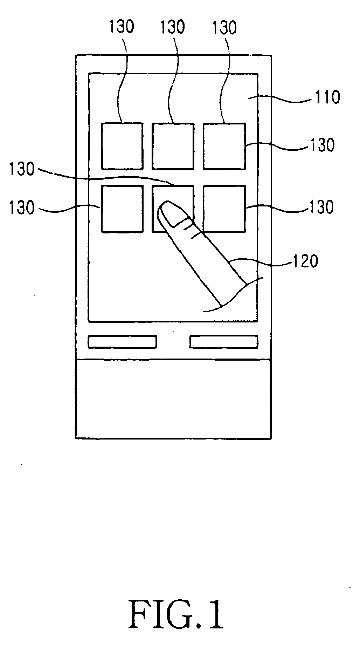

FIG 1 illustrates an overall operation when a user touches a screen 110 with his finger 120, for input in a portable terminal according to the present invention. Referring to FIG 1, the user touches or pushes one of a plurality of objects 130 displayed on the screen 110. Each time the user selects his desired object and an associated operation is executed, the portable terminal provides a feedback to the user by producing a set of vibrations to indicate selection of the right target object. The target object is one of digits, characters, icons, scrollers, check boxes, and sliders displayed on the screen.

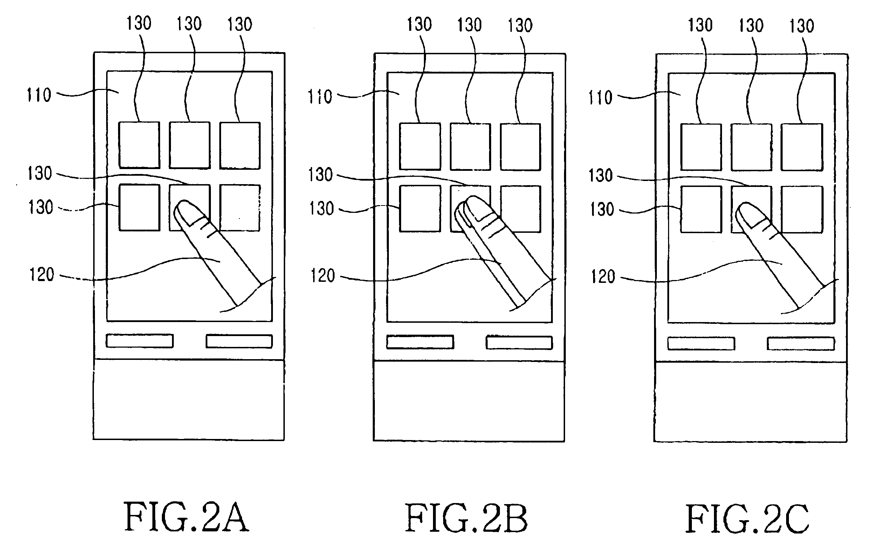

FIGs. 2A, 2B and 2C are views illustrating sequential operations when the user touches the screen with his finger, to provide an input to the portable terminal according to the present invention.

Referring to FIG 2A, the user's finger 120 touches one of a plurality of objects 130 displayed on the screen 110. Upon the finger touch, the portable terminal immediately starts to vibrate, with a first pattern

Referring to FIG 2B, the user's finger 120 pushes one of a plurality of objects 130 displayed on the screen. Upon the finger push, the portable terminal immediately starts to vibrate in a different pattern (a second pattern) from the vibration pattern of the finger touch. The vibrations may have a different force and a different duration. For example, the portable terminal can vibrate in a pattern of strong short vibrations or repetitions of strong short vibrations followed by pause.

FIG 2C illustrates the situation wherein the user's finger 120 is kept in contact with the screen 110 for a predetermined time after the operations illustrated in FIGs. 2A and 2B. Referring to FIG 2C, a predetermined time after vibrating in the pattern described with reference to FIG 2B (second pattern), the portable terminal vibrates in the additional vibration pattern associated with the finger touch illustrated in FIG 2A. In FIG 2C, a case of combining two or more vibration patterns is shown. In another aspect, not shown, an entirely different third vibration pattern may be produced.

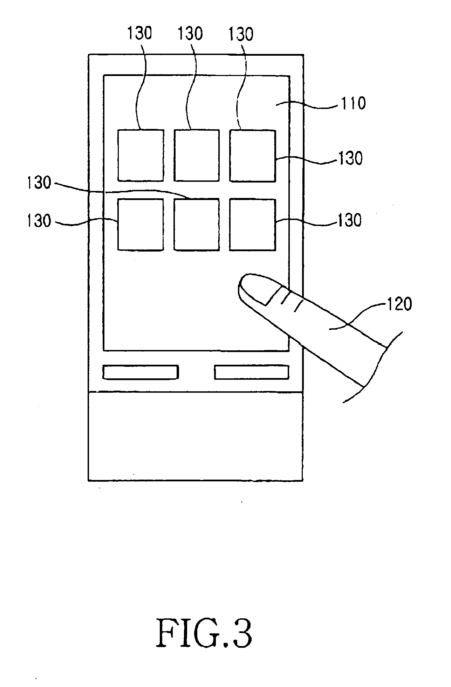

As illustrated in FIG 3, if a finger touch is sensed from an area other than an area defined for each object displayed on the screen, no vibration is generated irrespective of finger touch or finger push. The screen can be divided into vibration activation areas in which objects are displayed and non-vibration areas different than the vibration activation areas.

As described above, the present invention provides a feedback through vibration in a touch screen-touch pad integrated screen of a portable terminal, so that a user can select an intended object more accurately.

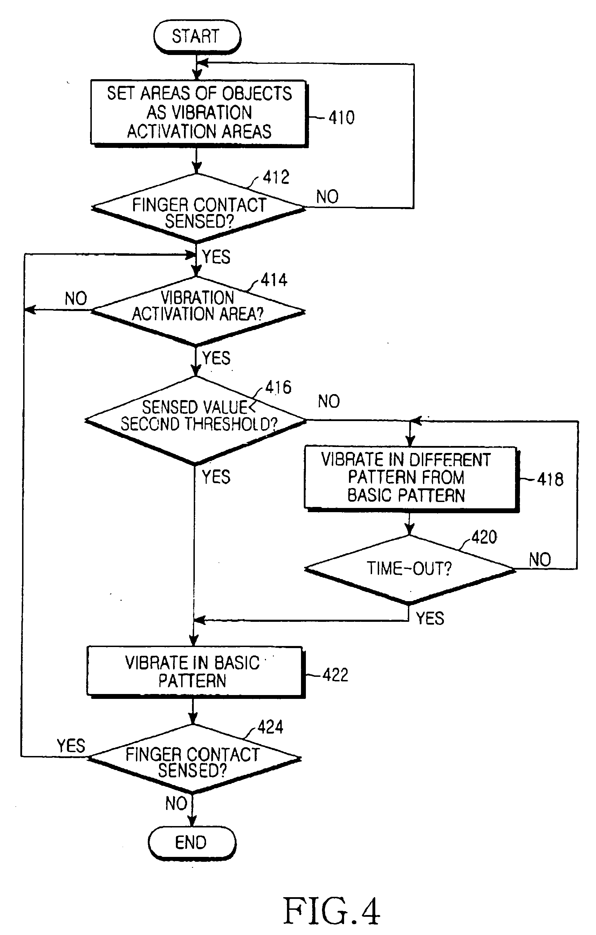

With reference to FIG 4, an input feedback method for the portable terminal according to an exemplary embodiment of the present invention will be described below.

FIG 4 is a flowchart illustrating a method for providing an input feedback in the portable terminal according to exemplary embodiments of the present invention.

Referring to FIG 4, the portable terminal sets areas representative of a plurality of objects to be displayed on the screen as vibration activation areas in step 410. Depending on the characteristics of user-desired information, the number of objects displayed on the screen may vary and as a result, the vibration activation areas can be adjusted. For instance, if more menus are needed in view of the characteristics of user-intended information, the number of objects displayed on the screen is also increased. Thus, the portable terminal at least sets the areas of corresponding to objects (icons) as vibration activation areas. In step 412, the portable terminal monitors a user's finger contact on the screen and determines whether the contacted area is a vibration activation area in step 414. If the touched area is a vibration activation area, the portable terminal compares a sensed value from the contacted area with at least one stored threshold value in step 416. In this illustrated case, the sensed value is determined to be less than a second threshold.

To be more specific, the sensed value can be a force or a pressure sensed from the user's finger on the contacted area. The pressure or force is a measurement of the finger's pressure measured by a pressure sensing signal. The portable terminal measures the force of the finger's pressure and identifies using the measurement whether the finger's contact is a "touch" or a "push" to decide whether an operation is to be performed. The scheme of sensing a pressure and performing a predetermined operation according to the sensed pressure in a portable terminal with a touch screen is referred to as a pressure measurement scheme. In the portable terminal using the pressure measurement scheme described herein, the threshold value may be expressed using a pressure unit. In step 416, the portable terminal compares the finger pressure with the threshold value.

When the user wants to select one of objects displayed on the screen, the threshold is set as a first threshold. When the user wants to invoke an operation corresponding to the selected object, the threshold is set as a second threshold.

An area of contact is calculated using coordinates on the screen. The process of sensing the increase or decrease of a pressure on the contacted area using predefined coordinates of the vibrations area in a portable terminal with a touch screen and performing a predetermined operation according to the sensing result is called an electrostatic scheme. In the electrostatic scheme, the threshold is about size of the contacted area. In this case, the portable terminal compares the contacted area size with the threshold in step 416.

In accordance with a second exemplary embodiment of the present invention, the threshold can be the first threshold for a predetermined detection pattern in the case where the user is to select an object and the second threshold for another predetermined detection pattern in the case where the user is to invoke an operation corresponding to an object.

When the user is to select a specific object on the screen, the detection pattern can be an electrostatic pattern for detecting the size of a contacted area using preset coordinates on the screen. On the other hand, in the case where the user is to invoke an operation corresponding to a selected object, the detection pattern is a pressure pattern for detecting a pressure value from the user's finger contact on the screen.

In accordance with the second exemplary embodiment of the present invention, the first threshold can be set as an electrostatic value and the second threshold can be set as a pressure measurement. In view of the characteristics of the detection patterns, a sensor can perform well by sensing a touched area when the user selects an object, i.e. the user touches an object and by sensing the force of pressure applied by the user's hand when the user is to invoke a command corresponding to an object, i.e. the user pushes the object.
In step 416, the portable terminal recognizes a touch or push action based on a sensed value. If the sensed value is less than the threshold, the portable terminal generates vibrations in a basic pattern, considering that the user intends to select an object in step 422.

The basic pattern is not a single pattern of vibrations with a constant force. It is rather one of many predetermined basic patterns. For example, the basic pattern can be one of the patterns of short strong vibrations, and a repetition of short strong vibrations followed by a pause. With a vibration in the basic pattern, the user can discriminate the selected object from any other object. Hence, for each object, the portable terminal can vibrate with a different vibration force in the basic pattern.

If the sensed value is larger than the threshold, the portable terminal vibrates in a different pattern from the basic pattern, considering that the user intends to invoke an operation corresponding to a selected object in step 418. The different vibration is generated by controlling the force and duration of the vibration. The vibration pattern can be one of the patterns of short strong vibrations, and a repetition of short strong vibrations followed by a pause. In step 418, the portable terminal counts the duration of the vibrations for a predetermined amount of time. When the duration reaches a predetermined time in step 420, the portable terminal vibrates in the basic pattern in step 422.

The user's finger contact with the portable terminal in sensed in step 424. If the finger contact is sensed, the portable terminal returns to step 414.

Now a description will be made of components of an input feedback providing apparatus in the portable terminal.

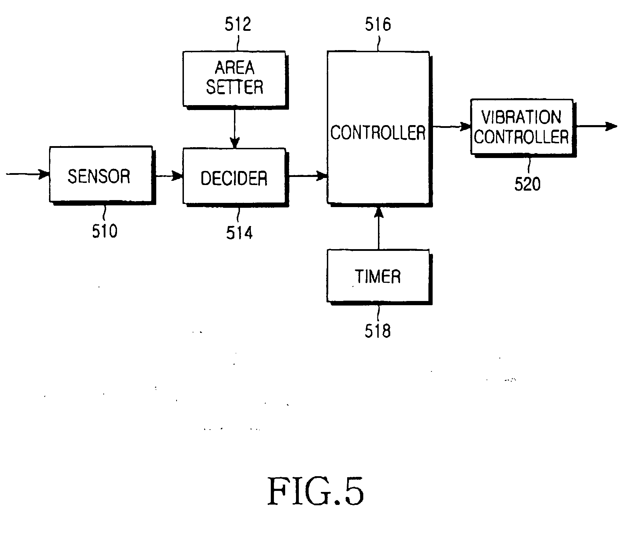

FIG 5 is a block diagram of an apparatus for providing an input feedback in the portable terminal according to an exemplary embodiment of the present invention.

Referring to FIG 5, the input feedback apparatus includes a sensor 510, an area setter 512, a decider 514, a controller 516, a timer 518, and a vibration controller 520.

The area setter 512 sets areas associated for a plurality of objects currently displayed on the screen as vibration activation areas. Under control of the controller 516, the area setter 512 receives information about the objects to be displayed on the screen and sets the areas associated with the objects as vibration activation areas. Upon receipt of an external signal from a vibration activation area, the area setter 512 provides an indication to the decider 514 that a vibration should be generated for the area.

The sensor 510 monitors a user's finger contact on the screen and provides the result of the monitoring to the decider 514. The decider 514 receives information about the vibration activation areas from the area setter 512, measures a sensed value from the monitored result, and compares the sensed value with a threshold value. In accordance with an exemplary embodiment of the present invention, if the portable terminal uses the pressure measure scheme, the sensor 510 is configured with a piezoelectric device and a resistor film. If the portable terminal uses the electrostatic scheme, the sensor 510 is configured to be a sensor that senses coordinates and an electrostatic capacity.

When objects are displayed initially on the screen, the controller 516 controls the area setter 512 to set areas for the objects as vibration activation areas. That is, vibrations are generated only for areas occupied by the objects. After the area setting, the area setter 512 notifies the decider 514 of the vibration activation areas. When being notified of a user's finger contact from the sensor 510, the decider 514 determines whether the contacted area is a vibration activation area. If the contacted area is a vibration activation area, the decider 514 compares a value sensed from the finger contact with at least one predetermined threshold. On the other hand, if the contacted area is not a vibration activation area, the portable terminal waits until a finger contact is sensed within a vibration activation area, without a further operation.

The decider 514 compares the sensed value with at least one threshold, i.e. first and second thresholds, determines, based on the comparison, whether the user finger contact is a touch or a push, i.e. whether the user intends to select an object or invoke an operation corresponding to an object, respectively, and notifies the controller 516 of the determination result.

In accordance with another exemplary embodiment of the present invention, the decider 514 measures a mechanical pressure applied from the user's finger or an electrostatic capacity measured from a user's finger contact area on the screen and provides the measurement to the controller 516.

The controller 516 outputs a vibration command signal for the generation of a vibration in a pattern corresponding to the user's intention based on the determination made by the decider 514, (i.e., object selection or command execution). More specifically, upon receipt of a touch signal indicating object selection from the decider 514, the controller 516 commands the vibration controller 520 to generate a vibration in a predetermined basic pattern. Upon receipt of a push signal, indicating command execution, from the decider 514, the controller 516 commands the vibration controller 520 to generate a vibration in a different pattern from the basic pattern. The vibration controller 520 generates a vibration by controlling the force and duration of the vibration according to the received command, thus giving a feedback to the user.

Meanwhile, the timer 518 counts or monitors the vibration duration and upon the expiration of a predetermined time, notifies the controller 516 of a completion of the time duration (i.e., a time-out). The controller 516 then outputs a vibration end signal to the vibration controller 520 to discontinue the vibration.

As is apparent from the above description, the input feedback method and apparatus of the present invention generate a vibration with an adjustable force, when a user selects an intended object in a small-size portable terminal requiring fine pointing on a limited screen. Therefore, the resulting vibration feeling indicates to the user that the right object has been selected.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

## Claims

1. An input feedback method in a portable terminal having a touch input device, comprising:
sensing a user's finger contact on a screen having a plurality of objects displayed;
comparing a value sensed from the finger contact with at least one threshold; and
generating a vibration in a different manner according to a comparison result.

2. The input feedback method of claim 1, further comprising setting areas associated with the displayed objects as vibration activation areas.

3. The input feedback method of one of claims 1 to 2, wherein the sensed value is an electrostatic value obtained from the finger contact using coordinates on the screen and a size of a finger contact area.

4. The input feedback method of one of claims 1 to 3, wherein the sensed value is a value of mechanical pressure applied from the finger contact.

5. The input feedback method of one of claims 1 to 4, wherein the at least one threshold includes a first threshold for determining whether the user wants to select an object, and a second threshold for determining whether the user wants to invoke an operation corresponding to the selected object.

6. The input feedback method of claim 1, wherein the comparison comprises:
determining that the user wants to select an object, if the sensed value is larger than the first threshold and less than the second threshold; and
determining that the user wants to invoke an operation corresponding to the selected object, if the sensed value is larger than or equal to the second threshold.

7. The input feedback method of claim 6, wherein the determination that the user wants to select an object comprises determining the user's finger contact is a touch action or a push action.

8. The input feedback method of one of claims 5 to 6, wherein the first threshold is an electrostatic capacity value measured from an area contacted by the user's finger.

9. The input feedback method of claim 5, wherein the second threshold is a mechanical pressure value generated from a pressure applied by the user's finger.

10. The input feedback method of claim 7, wherein if the sensed value is larger than the first threshold being a predetermined electrostatic capacity, the user's finger contact is a touch action.

11. The input feedback method of claim 7, wherein if the sensed value is larger than the second threshold being a predetermined pressure, the user's finger contact is a push action.

12. An input feedback apparatus in a portable terminal having a touch input device, comprising:
an area setter for setting areas associated with a plurality of objects displayed on a screen as vibration activation areas;
a sensor for monitoring an area a user's finger contacts the screen;
a decider for determining whether a contacted area is a vibration activation area by comparing a value sensed from the finger contact with at least one threshold, and outputting a comparison result;
a controller for outputting information about the objects to the area setter, receiving the comparison result from the decider, and generating a vibration command signal indicating generation of a vibration according to the comparison result; and
a vibration controller for generating a vibration by controlling a vibration force and a vibration duration under the control of the controller.

13. The input feedback apparatus of claim 12, wherein the decider compares the sensed value with the threshold using one of a mechanical pressure applied by the user's finger contact and an electrostatic capacity measured from the contacted area on the screen.

14. The input feedback apparatus of claim 12, further comprising:
a timer for counting the duration of the vibration and upon expiration of a predetermined time, notifying the controller of the time-out.

15. The input feedback apparatus of claim 12, wherein the comparison og s value comprises:
determining that the user wants to select an object, if the sensed value is larger than a first threshold and less than a second threshold; and
determining that the user wants to invoke an operation corresponding to the selected object, if the sensed value is larger than or equal to the second threshold.
